# EUROPEAN PATENT SPECIFICATION

(11) **EP 0 339 111 B1**
(45) Date of publication and mention of the grant of the patent: **31.03.1993**
(21) Application number: 88106777.1
(22) Date of filing: 27.04.1988
(51) Int. Cl.: C08F 8/50, C08F 114/26

(54) **Method for radiation processing of materials**
Verfahren zur Werkstoffbestrahlung
Procédé d'irradiation de matériaux

(43) Date of publication of application: 02.11.1989
(73) Proprietor: SHAMROCK CHEMICAL CORPORATION, Newark New Jersey 07114 (US)
(72) Inventor: Neuberg, William B, Perrineville, NJ 08535 (US); Luniewski, Robert, Smithtown, NY 11788 (US)
(74) Representative: von Bezold, Dieter, Dr.

(56) References cited:
- GB-A- 2 119 385

## Description

### Background of the Invention

This invention relates to radiation processing for the degradation of materials and specifically to radiation degradation of polytetrafluoroethylene (PTFE).

### U.S. Patent 3,766,031 to Dillon discloses a method for radiation processing of polytetrafluoroethylene, wherein the polytetrafluoroethylene is exposed to radiation and thereafter subjected to comminution to reduce the polytetrafluoroethylene to a fine particle powder. This powder is useful as a dry lubricant, for example, in paints and inks. This and other methods for carrying out this technique generally made use of electron beam or cobalt sources for irradiating the polytetrafluoroethylene. The material being irradiated was arranged in trays and exposed to multiple doses of radiation, approximately 2 to 15 MR per pass, so that the temperature of the material does not rise excessively, thereby to avoid discoloration of the material and the possible generation of noxious gases. The total dose is approximately 0,35 to 1,50 MGy (35 to 150 MR).

The tray irradiation technique has a radiation utilization efficiency of only approximately 35%. Radiation inefficiencies arise from the three factors, which are (1) overscan of trays, (2) gaps between trays and (3) depth-dose characteristics for an electron beam.

The need to assure complete and uniform radiation of a tray requires some overscan by the radiation and an efficiency loss of 5 to 15%. Likewise there is usually some space between trays of material which causes a further 10 to 15% loss of efficiency.

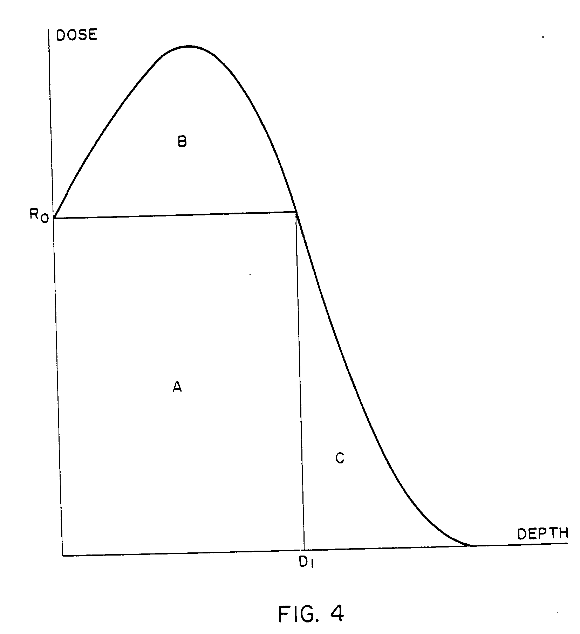

The largest efficiency loss arises out of the fact that the dose received by the material varies with material depth. This variation is illustrated in the graph of Figure 4. Typically the dose at the surface, designated R, is taken as the nominal dose for the material. Beam energy and/or material depth is adjusted so that an equal dose at the opposite surface of the material (Depth D). Radiation which passes entirely through the product (Area C) is not utilized. Radiation in Area B in excess of the nominal dose R, is likewise not used. This causes further inefficiency, and in some instances may result in undesired properties of the resultant product. Overall this depth-dose characteristic can cause processing inefficiency of up to 50%.

The prior art technique of slow irradiation of material by subsequent exposures to doses of radiation, occasionally coupled with stirring the material between exposures, tends to cause the production of radiation degraded polytetrafluoroethylene powder to be an expensive, inefficient and time consuming operation.

From GB-A-2 119 385 is known a method for processing flowable solid polytetrafluorethylene material (PTFE) by radiation degradation to reduce the molecular weight of the material and render it grindable into a powder. The method includes exposing the material to radiation, agitating the material during the exposure, and maintaining the material at a temperature below 260°C (500°F) during exposure. The known method is carried out in a processing vessel for holding the material and equiped with a radiation source for supplying radiation to the processing vessel and means for agitating the material during the processing. For maintaining the material below the above indicated selected temperature the processing vessel is equiped with a cooling jacket for the flow of cooling water and cooling the vessel. Additionally, the cooling may be supported by the supply of air into the processing vessel which tends to promote the cooling of the material.

It is the object of the present invention to provide a method for producing radiation degraded polytetrafluorethylene with an increased efficiency.

### Summary of the invention

In accordance with the present invention there is provided a method for processing flowable solid polytetrafluorethylene material by radiation to degrade said material to lower its molecular weight, wherein said material is supplied to a processing vessel and irradiated in the processing vessel and wherein said radiation is supplied to a selected region of said processing vessel, said material is agitated in the processing vessel during said radiation thereby to repeatedly move said material into and out of said selected region so that the said material is uniformly irradiated, and wherein material is cooled to maintain a selected temperature below 260°C during said processing in which the cooling is achieved by supplying water to said material during said processing.

Preferred embodiments of the inventive method are the subject of the dependent claims.

### Brief Description of the Drawings

Figure 1 is an end elevation view of a material processing apparatus for carrying out the inventive method;
Figure 2 is a cross-sectional view of the processing vessel of the Figure 1 apparatus;
Figure 3 is a side view of the processing vessel of the Figure 1 apparatus; and
Figure 4 is a graph illustrating the dose of radiation received by material to be processed at various depths.

### Description of the Invention

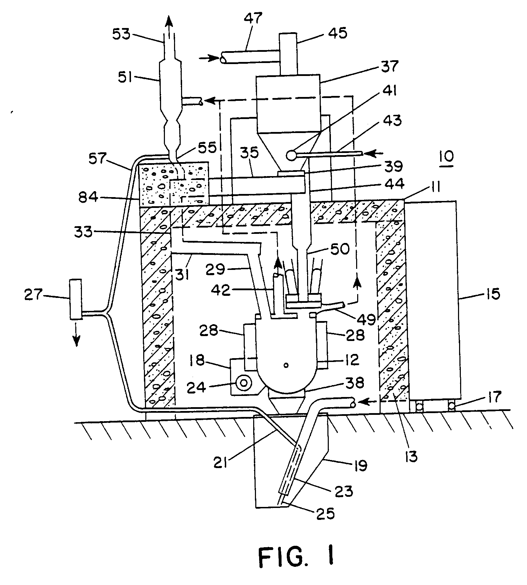

Figure 1 is an end elevation view of an apparatus 10 for processing material in accordance with the present invention. Apparatus 10 is particularly useful for performing radiation degradation of polytetrafluoroethylene in order to degrade the material by reducing its molecular weight and render the material grindable into a powder.

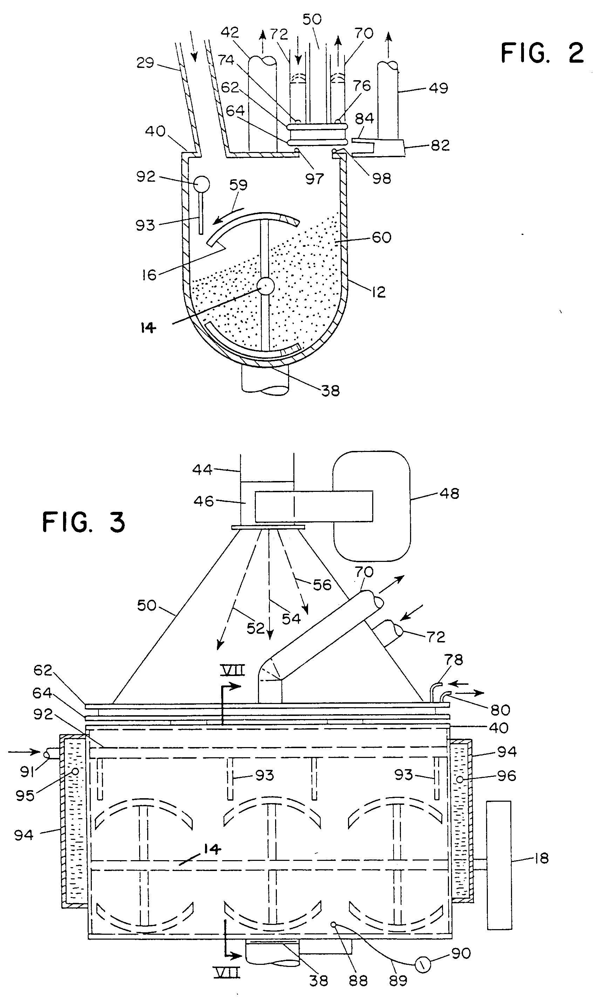

Apparatus 10 includes a processing vessel 12, which comprises the vessel of a ribbon blender, shown in greater detail in Figures 2 and 3. Vessel 12 includes a longitudinal shaft 14 having attached thereto ribbon blending paddles 16. Processing vessel 12 and its associated equipment are enclosed in a radiation chamber 11, made of masonry or other radiation attenuating material. Chamber 11 has an access opening 13 which is closed by door 15 mounted on rollers 17. Door 15 is provided for equipment access, and other openings, such as a zig-zag hallway, may be provided for personal access. As may be more easily seen by reference to Figures 2 and 3, the paddles are arranged so that the material within the ribbon blender is moved axially back and forth in the longitudinal direction of shaft 14 when the shaft is continuously rotated in the direction of arrow 59, and therefore the material undergoes no average axial displacement within the vessel.

Shaft 14 is driven by reduction gear 18 which is driven by motor 24. In a typical embodiment the shaft rotates at a speed of approximately 40 revolutions per minute, stirring and agitating material 60 which has been placed on the inside of the vessel 12.

In one embodiment, the vessel 12 has paddles with a radius of 45 cm (18 inches) and is 183 cm (72 inches) in length. The vessel is provided with a remote control outlet opening 38 in the bottom, for use in draining material after processing. Opening 38 is arranged above material receiving chamber 19, so that upon opening processed material in vessel 12 will flow into the receiving chamber 19. The material is removed from the receiving chamber by a vacuum apparatus 27 which draws the material into nozzle 25 and through conduit 21. Air inlet conduit 23 is arranged concentric to nozzle 25 to provide an air supply for material removal by the vacuum apparatus. Alternately a screw conveyer might be used.

The apparatus for carrying out the present inventive method includes mechanisms for supplying flowable solid material to the processing vessel 12. This equipment includes a generally vertical chute 29 leading into the processing vessel and communicating at its upper end with a horizontal screw conveyer 31, which is located within radiation chamber 11. Vertical chute 33 passes through the top of radiation chamber 11 and connects interior screw conveyer 31 with exterior screw conveyer 35. The region surrounding vertical shaft 33 is provided with additional radiation shielding structure 84, which may be fabricated out of bricks or the like. Exterior screw conveyer 35 receives granular material to be processed from the bottom of hopper 37, which is provided with a remote control valve 39, and a vibrator 41 operated by compressed air supplied over conduit 43. Granular material is supplied to hopper 37 by conduit 47 through which material is drawn by vacuum apparatus 45.

Processing vessel 12 is provided with a cover 40 and a vent conduit 42 through which air is exhausted under lower than atmospheric pressure in order to remove airborne material particles and fluorine gases from the processing vessel so that they do not accumulate and corrode the window of the electron beam source. An additional venting conduit 49, having lower end 82 with a nozzle 84, arranged near the outlet of the electron beam source, may also be provided.

Conduits 42 and 49 are connected to a cyclone separator 51, which separates airborne material particles from exhaust gases, which are vented through conduit 53. Particles which accumulate in separator 51 may be returned to the processing vessel over conduit 55 during initial stages of the processing. At later stages of the processing, the material collected by separator 51 is sufficiently degraded so that it may be provided over conduit 57 to output vacuum apparatus 27.

The electron beam accelerator, which is used to provide a radiation source for the Figure 1 apparatus includes a vacuum output passage 44 which is connected to a sectoral horn 50 by a beam steering section 46 (not shown in Fig. 1), which is provided with an electro-magnet 48, shown in Figure 3. The electron beam source used has an electron acceleration of 1 million volts, and can provide beam current of up to 100 milli-amperes. Beam steering section 46 causes the beam to oscillate back and forth in the sectoral horn 50 to assume beam paths 52, 54 and 56, illustrated in Figure 3, thus spreading the radiation along the length of vessel 12.

In a typical process, flowable solid material such as virgin or scrap polytetrafluoroethylene, in course powder or chip form is placed into the vessel 12 and subjected to agitation by the rotation of stirrers 16 while undergoing irradiation by means of electron beams supplied from electron source 44. The electron beam from source 44 is steered in vacuum passage 46 by alternating currents applied to electromagnet 48 so that the electron beam diverges in sectoral horn 50 into paths which are spread out in one angular direction along the length of the vessel 12 as indicated by beams 52, 54 and 56. The action of stirrers 16 rotating in direction 59 tends to circulate the material for uniform irradiation. The electron beams exit from the sectoral horn vacuum through windows 58 and 66. The irradiation by the electron beam, in combination with the stirring action of stirrer 16 of the ribbon blender causes the degradation of the material to lower its molecular weight from around 5,000,000 to 10,000,000 to less than 1,000,000 and probably less than 100,000. When the molecular weight of the material is thus lowered, it becomes grindable into a powder. In order to promote the reaction by supply of oxygen, provide further cooling of the material during the irradiation process, while the material is undergoing reaction, and in order to make the material more fluid and easier to stir, air may be provided into the vessel 12.

By reason of the agitating action of the stirrers 16, the process may produce a considerable amount of airborne particles. These particles are constrained within dust cover 40, which is provided with an outlet conduit 42, which is positively ventilated through dust collector 51, whereby the recovered material can be recycled into the process vessel or collected as degraded, low molecular weight product through conduits 55 and 57.

It should be noted as shown in the cross-sectional view of Figure 4 that the action of the stirrers 16 rotating in the direction of arrow 59 will cause the process material 60 to build up on one side, for example, the right side, of the reaction vessel 12. In order to provide the most effective radiation treatment, the sectoral horn 50 is directed to a selected region of irradiation at this side of the reaction vessel, so that the electron beams intercept the maximum amount of material to be processed. By directing radiation into the portion of the vessel having a larger depth of material, the efficiency of the process is enhanced, since essentially all of the incident radiation is intercepted by material, rather than passing through without reaction. Further, overradiation which might normally occur for material close to the surface upon which the radiation is incident is avoided by reason of the agitation of the material by the paddles 16.

In order to provide processing of polytetrafluoroethylene in accordance with the method of the present invention using the apparatus of Figure 1, scrap or virgin polytetrafluoroethylene in flowable solid form such as coarse powder or chips, either sintered or unsintered, is supplied to the vessel through chute 29. Typically, during processing the volume of the charge of material provided to the reaction vessel is reduced as the bulk density of the material is increased during processing. Processing of a batch of material (approximately 1450 kg (3200 lbs.)) may use an electron beam accelerated at 1 million volts with a current of 20 to 100 milliamps for six or seven hours. As an alternate to the use of an electron beam accelerator, a radioactive material, such as Cobalt-60, can provide the radiation. Typically, only a portion of the full load of material is initially supplied to vessel 12, for example, one-third to one half the load. Since the bulk density of chip form PTFE is generally low, this fills the volume of the vessel. Following initial irradiation, additional material can be added because of the increase in bulk density and consequent reduction of material volume during irradiation. After the full load of material is provided, radiation, agitation and cooling continues until the material receives a dose of 2,75 to 3,30 MGy per kg (125 to 150 Mrad per pound). During this processing, the temperature of the material is monitored by thermal sensor 88, which is connected by wire 89 to remote meter 90. When the temperature of the material exceeds a selected value, the radiation beam current is reduced. The maximum temperature should be below 260°C (500°F), preferably below 121°C (250°F).

It has been found that the polytetrafluoroethylene can be cooled and an improved product obtained by supplying water to the processing vessel 12 during processing. Referring to Figures 2 and 3 which show processing vessel 12, a pipe 91 supplies cooling water to a manifold 92 from which extend tubes 93. This arrangement facilitates the addition of water to the material 60 being processed in the vessel 12. In this preferred embodiment, cooling jackets 94 supplied with cooling water through inlet and outlet conduits 95 and 96 have been added to the ends of the vessel 12. Water flows between the jackets through a conduit, not shown, joining them together. In addition, conduits 97 and 98 have been affixed to the edges surrounding the opening in cover 40 to provide water cooling of the cover to prevent warping due to the high temperatures otherwise encountered. All of the cooling water supplied has a temperature within the dew point of the surrounding air to avoid condensation and the formation of hydrofluoric acid.

Instead of using the conduit 91 and manifold 92 to supply water to the vessel, a manifold can be positioned above the vessel 12 and four tubes extended downwardly therefrom through the cover 40 to supply water to the material being processed. The manifold above the vessel is fed cooling water through a suitable inlet conduit.

It was anticipated that the addition of water to the material being processed would provide cooling by evaporation. It was discovered, however, that the initial amounts of water added to the polytetrafluoroethylene caused an increase in temperature of the material, contrary to expectations. While the reasons for the temperature increase are not completely understood, it is believed that the water undergoes a reaction with the polytetrafluoroethylene. It is suspected that this reaction includes the combining of water with free fluorine in the vessel to form hydrofluoric acid.

The temperature increase caused by the reaction of water with the material is greatest when the material being processed is that known as virgin polytetrafluoroethylene. When that material is being processed, it has been found that water should be added to the vessel when the material reaches a temperature of about 127°C (260°F). With a batch of polytetrafluoroethylene of about 1350 kg (3000 pounds) in the vessel, a water flow of 1/2 liter to 2 liters per minute has been found satisfactory. When the temperature of the processed material is lowered to about 118°C (245°F), the water flow is diminished or interrupted until the temperature again increases to about 127°C (260°F), at which time water is again supplied to the vessel.

Experiments have shown that if the temperature of virgin polytetrafluoroethylene is permitted to rise as high as 130°C (265°F), the addition of water will cause the temperature to increase further, due to the reaction of water with the materials in the vessel, and it then becomes necessary to interrupt the processing to cool the mixture and maintain it in a stable condition, thereby preventing discoloration.

When the polytetrafluoroethylene processed is what is called "hard stock," i.e., sintered scrap polytetrafluoroethylene which has already had a heat treating history, the increase in temperature caused by the addition of water is less than with the virgin polytetrafluoroethylene. In processing this material, it has been found that its temperature can be allowed to rise to about 199°C (390°F), at which point water is added and the material cooled to about 190°C (375°F) before the water supply is diminished or interrupted.

As a further example, when processing the materials known as (1) granular polytetrafluoroethylene (also known as "white tails"), (2) scrapped teflon tape or (3) non-virgin polytetrafluoroethylene, or a combination of these materials, the temperature can be allowed to rise to about 130°C (265°F) before water is supplied to the material. After cooling to about 121°C (250°F) the water supply is diminished or interrupted until the temperature again rises to about 130°C (265°F).

It has been unexpectedly found that the addition of water to the process material causes an improvement in the oil absorption characteristics of the resulting powder, i.e., its oil absorption characteristic is lowered. A powder with lower oil absorption when mixed in a carrier such as an oil or solvent for paint, provides a flowable consistency like honey with low thickening properties. This is generally desirable. A material with higher oil absorption when mixed with a carrier, provides a consistency more like peanut butter, i.e., higher thickening properties, and is less desirable as a product. The material produced when cooling water is added to the polytetrafluoroethylene during processing has the desirable low oil absorption property, and this is a superior product for many applications.

## Claims

1. A method for processing flowable solid polytetrafluoroethylene material by radiation to degrade said material to lower its molecular weight, wherein said material is supplied to a processing vessel and irradiated in the processing vessel and wherein said radiation is supplied to a selected region of said processing vessel, said material is agitated in the processing vessel during said radiation thereby to repeatedly move said material into and out of said selected region so that the said material is uniformly irradiated, and wherein the material is cooled to maintain a selected temperature below 260°C during said processing, characterized in that the cooling is achieved by supplying water to said material during said processing.

2. A method according to claim 1
wherein the material is virgin polytetrafluoroethylene, further characterized in that the selected temperature is about 127°C.

3. A method according to claim 2 further characterized in that said addition of water is interrupted when the temperature of the material is lowered to about 118°C.

4. A method according to claim 1
wherein the material processed is sintered scrap polytetrafluoroethylene which has a heat treatment history, further characterized in that said selected temperature is below about 199°C.

5. A method according to claim 4 further characterized in that addition of water is interrupted when the temperature is lowered to about 190°C.

6. A method according to claim 1
wherein the material processed is non-virgin polytetrafluoroethylene, further characterized in that said selected temperature is about 130°C.

7. A method according to claim 6 further characterized in that addition of water is interrupted when the temperature of the material is lowered to about 121°C.

8. A method according to claim 1
wherein the material is granular polytetrafluoroethylene chips further characterized in that said selected temperature is about 130°C.

9. A method according to claim 8 further characterized in that addition of water is interrupted when the temperature of the material is lowered to about 121°C.

10. A method according to claim 1
wherein the material processed is scrap polytetrafluoroethylene tape, further characterized in that said selected temperature is about 130°C.

11. A method according to claim 10 further characterized in that addition of water is interrupted when the temperature is lowered to about 121°C.

## Patentansprüche

1. Verfahren zum Verarbeiten eines fließfähigen, festen Polytetrafluorethylen-Materials durch Bestrahlen, um das Material abzubauen, um sein Molekulargewicht zu erniedrigen, worin das Material einem Verarbeitungsgefäß zugeführt wird und in dem Verarbeitungsgefäß bestrahlt wird, und worin die Bestrahlung auf einen ausgewählten Bereich des Verarbeitungsgefäßes gerichtet ist, das Material in dem Verarbeitungsgefäß während der Bestrahlung bewegt wird, wodurch das Material wiederholt in und aus dem ausgewählten Bereich bewegt wird, so daß das Material gleichförmig bestrahlt wird, und worin das Material gekühlt wird, um während der Verarbeitung eine ausgewählte Temperatur unter 260°C aufrechtzuerhalten, dadurch gekennzeichnet, daß die Kühlung durch Zufuhr von Wasser zu dem Material während der Verarbeitung erreicht wird.

2. Verfahren nach Anspruch 1, worin das Material frisches Polytetrafluorethylen ist, darüber hinaus dadurch gekennzeichnet, daß die ausgewählte Temperatur etwa 127°C beträgt.

3. Verfahren nach Anspruch 2, darüber hinaus dadurch gekennzeichnet, daß die Zugabe von Wasser unterbrochen wird, wenn die Temperatur des Materials unter etwa 118°C sinkt.

4. Verfahren nach Anspruch 1, worin das zu verarbeitende Material gesintertes Abfallpolytetrafluorethylen ist, das bereits wärmebehandelt wurde, darüber hinaus dadurch gekennzeichnet, daß die ausgewählte Temperatur unter etwa 199°C liegt.

5. Verfahren nach Anspruch 4, dadurch gekennzeichnet, daß die Zugabe von Wasser unterbrochen wird, wenn die Temperatur unter etwa 190°C sinkt.

6. Verfahren nach Anspruch 1, worin das zu verarbeitende Material nicht-frisches Polytetrafluorethylen ist, darüber hinaus dadurch gekennzeichnet, daß die ausgewählte Temperatur etwa 130°C beträgt.

7. Verfahren nach Anspruch 6, darüber hinaus dadurch gekennzeichnet, daß die Zugabe von Wasser unterbrochen wird, wenn die Temperatur des Materials unter etwa 121°C sinkt.

8. Verfahren nach Anspruch 1, worin das Material aus körnigen Polytetrafluorethylen-Chips besteht, darüber hinaus dadurch gekennzeichnet, daß die ausgewählte Temperatur etwa 130°C beträgt.

9. Verfahren nach Anspruch 8, darüber hinaus dadurch gekennzeichnet, daß die Zugabe von Wasser unterbrochen wird, wenn die Temperatur des Materials unter etwa 121°C sinkt.

10. Verfahren nach Anspruch 1, worin das zu verarbeitende Material aus Abfall von Polytetrafluorethylen-Bändern besteht, dadurch gekennzeichnet, daß die ausgewählte Temperatur etwa 130°C beträgt.

11. Verfahren nach Anspruch 10, darüberhinaus dadurch gekennzeichnet, daß die Zugabe von Wasser unterbrochen wird, wenn die Temperatur unter etwa 121°C sinkt.

## Revendications

1. Procédé de traitement par irradiation de polytétrafluoroéthylène solide pouvant s'écouler de lui-même, afin de dégrader ce matériau pour abaisser son poids moléculaire, dans lequel le matériau est introduit dans un réacteur de traitement et irradié dans ce réacteur de traitement, l'irradiation est appliquée à une région sélectionnée du réacteur de traitement, le matériau est agité dans le réacteur de traitement pendant l'irradiation pour déplacer ainsi, d'une manière répétée, le matériau vers la région sélectionnée et en sens opposé, de telle façon que le matériau soit irradié d'une manière uniforme, et le matériau est refroidi afin de maintenir une température sélectionnée inférieure à 260°C pendant le traitement, caractérise en ce que le refroidissement est réalisé en fournissant de l'eau au matériau pendant le traitement.

2. Procédé suivant la revendication 1, dans lequel le matériau est du polytétrafluoroéthylène vierge, caractérisé en outre en ce que la température sélectionnée est d'environ 127°C.

3. Procédé suivant la revendication 2 caractérisé en ce que l'addition d'eau est interrompue lorsque la température du matériau est abaissée à environ 118°C.

4. Procédé suivant la revendication 1, dans lequel le matériau traité est du polytétrafluoroéthylène en morceaux frittés qui a déjà été soumis à un traitement thermique, caractérisé en ce que la température sélectionnée est inférieure à environ 199°C.

5. Procédé suivant la revendication 4 caractérisé en ce que l'addition d'eau est interrompue lorsque la température du matériau est abaissée à environ 190°C.

6. Procédé suivant la revendication 1, dans lequel le matériau est du polytétrafluoroéthylène non vierge, caractérisé en outre en ce que la température sélectionnée est d'environ 130°C.

7. Procédé suivant la revendication 6 caractérisé en ce que l'addition d'eau est interrompue lorsque la température du matériau est abaissée à environ 121°C.

8. Procédé suivant la revendication 1, dans lequel le matériau est du polytétrafluoroéthylène granuleux en copeaux, caractérisé en outre en ce que la température sélectionnée est d'environ 130°C.

9. Procédé suivant la revendication 8 caractérisé en ce que l'addition d'eau est interrompue lorsque la température du matériau est abaissée à environ 121°C.

10. Procédé suivant la revendication 1, dans lequel le matériau est une bande de polytétrafluoroéthylène en morceaux, caractérisé en outre en ce que la température sélectionnée est d'environ 130°C.

11. Procédé suivant la revendication 10 caractérisé en ce que l'addition d'eau est interrompue lorsque la température du matériau est abaissée à environ 121°C.
